# EUROPÄISCHE PATENTANMELDUNG

(11) **EP 4 852 283 A1**
(43) Veröffentlichungstag der Anmeldung: **09.12.2026**
(21) Anmeldenummer: 26178348.4
(22) Anmeldetag: 12.05.2026
(51) Int. Cl.: H02K 5/173, F16C 25/08, F16C 35/06, H02K 5/04, H02K 7/08, H02K 7/116

(54) **ELEKTROMOTOR**

(30) Priorität: 04.06.2025 DE 102025121940
(71) Anmelder: Dr. Fritz Faulhaber GmbH & Co. KG, 71101 Schönaich (DE)
(72) Erfinder: Calvello, Aldo, 71101 Schönaich (DE); Peroni, Matteo, 71101 Schönaich (DE)
(74) Vertreter: Dr. Solf & Zapf Patent- und Rechtsanwalts PartG mbB

(57) **Zusammenfassung**

Die vorliegende Erfindung betrifft einen Elektromotor (1), aufweisend mindestens ein Gehäuse (3), wobei das Gehäuse (3) einen zylindrischen Abschnitt (3a) und an einer ersten Endseite (1a) einen einstückig mit dem zylindrischen Abschnitt (3a) ausgebildeten Gehäuseboden (3b) aufweist, wobei das Gehäuse (3) an einer zweiten Endseite (1b) mindestens eine Deckelelement (15) aufweist, mindestens einen Rotor (4) und mindestens einen Stator (5), wobei der Rotor (3) mindestens eine Rotorwelle (6) aufweist, und wobei die Rotorwelle (5) mit mindestens einem ersten Wellenlager (7) und mindestens einem zweiten Wellenlager (8) gelagert ist.

Der Elektromotor (1) zeichnet sich dadurch aus, der Rotor (3) mindestens eine erste Stützscheibe (11) aufweist, dass die erste Stützscheibe (11) der ersten Endseite (1a) zugewandt ist, und dass die erste Stützscheibe (11) zum Abstützen des Rotors (3) gegen den Außenring (7a) des ersten Wellenlagers (7) und/oder gegen das Gehäuse (3) bei einer axialen Beschleunigung entlang einer Längsachse (A) der Rotorwelle (5) ausgebildet ist..

## Beschreibung

Die Erfindung betrifft einen Elektromotor, aufweisend mindestens ein Gehäuse, mindestens einen Rotor und mindestens einen Stator. Das Gehäuse weist einen zylindrischen Abschnitt und an einer ersten Endseite einen einstückig mit dem zylindrischen Abschnitt ausgebildeten Gehäuseboden auf. An einer zweiten Endseite weist das Gehäuse mindestens ein Deckelelement auf. Der Rotor weist mindestens eine Rotorwelle auf, die Rotorwelle mit mindestens einem ersten Wellenlager und mindestens einem zweiten Wellenlager gelagert ist. Das erste Wellenlager weist mindestens einen Außenring auf, an dem mindestens ein Absatz ausgebildet ist, der an dem Gehäuse anliegt.

Elektromotoren sind im Stand der Technik in einer Vielzahl von Ausgestaltungen bekannt. In bestimmten Anwendungsbereichen, insbesondere in der Luft- und Raumfahrttechnik, müssen Elektromotoren extremen mechanischen Belastungen standhalten. Dazu zählen vor allem hohe Beschleunigungs- und Bremskräfte, wie sie beim schnellen Bewegen oder Positionieren von Klappen, Rudern oder anderen steuerbaren Komponenten auftreten. Für diese anspruchsvollen Einsätze ist eine besonders robuste und präzise Auslegung der Elektromotoren erforderlich. Die aus dem Stand der Technik bekannten Lösungen stoßen dabei häufig an ihre Grenzen, da die Konstruktion und Fertigung solcher Motoren mit einem hohen Aufwand verbunden ist.

Der vorliegenden Erfindung liegt daher die Aufgabe zugrunde, einen Elektromotor anzugeben, der vorteilhaft für hohe axiale Belastungen, insbesondere Beschleunigungen, ausgelegt ist.

Die vorgenannte Aufgabe wird bei einem gattungsgemäßen Elektromotor mit den Merkmalen des kennzeichnenden Teils des Anspruchs 1 gelöst, nämlich dadurch, dass der Rotors mindestens eine erste Stützscheibe aufweist, dass die erste Stützscheibe der ersten Endseite zugewandt ist, und dass die erste Stützscheibe zum Abstützen des Rotors gegen den Außenring des ersten Wellenlagers und/oder gegen das Gehäuse, insbesondere den einstückig ausgebildeten Gehäuseboden, bei Kraftwirkung, z. B. Beschleunigung, entlang der Rotorachse ausgebildet ist.

Der Stator und der Rotor sind vorzugsweise in einem von dem Gehäuse umschlossenen Innenraum angeordnet. Das Gehäuse weist zumindest einen zylindrischen Abschnitt und an einer ersten Endseite einen einstückig mit dem zylindrischen Abschnitt ausgebildeten Gehäuseboden auf. Der zylindrische Abschnitt erstreckt sich vorzugsweise parallel zu einer Längsachse. Insbesondere ist der Gehäuseboden dicker als die Gehäusewand im zylindrischen Abschnitt ausgebildet, vorzugsweise mindestens doppelt oder mindestens viermal so dick. Das Gehäuse ist insbesondere topfartig einstückig ausgebildet. Beispielsweise ist das Gehäuse einstückig mittels eines spanenden Verfahrens, z. B. Fräsen, hergestellt. An einer der ersten Endseite gegenüberliegenden zweiten Endseite weist das Gehäuse mindestens ein Deckelelement auf. Das Deckelelement ist separat ausgebildet und beispielsweise mit dem zylindrischen Abschnitt verbunden, z. B. verschweißt oder verklebt. Das Deckelelement weist beispielsweise eine Dicke auf, die etwa der Dicke des Gehäusebodens entspricht. Es ist aber auch vorgesehen, dass das Deckelelement dicker als der Gehäuseboden ausgebildet ist. Der Elektromotor hat vorzugsweise einen Außendurchmesser zwischen 14 mm und 20 mm.

Der Stator umgibt vorzugsweise den Rotor. Die Rotorwelle des Rotors ist mindestens mit einem ersten Wellenlager und mindestens einem zweiten Wellenlager gelagert. Das erste Wellenlager ist insbesondere an der ersten Endseite des Elektromotors und das zweite Wellenlager an der zweiten Endseite des Elektromotors angeordnet. Vorzugsweise steht die Rotorwelle an der zweiten Endseite, z. B. zum Verbinden mit einem Getriebe, hervor.

Vorzugsweise ist vorgesehen, dass mindestens ein Permanentmagnet zumindest teilweise mit Kunststoff an die Rotorwelle angespritzt ist. Vorzugsweise sind eine Mehrzahl an Permanentmagneten mit einem Kunststoff an die Rotorwelle angespritzt. Das Kunststoffspritzgussverfahren dient zur formschlüssigen Befestigung des Permanentmagneten bzw. der Permanentmagnete. Das Anspritzen verbessert die mechanische Stabilität bei hohen Drehzahlen und schützt die Permanentmagnete vor Umwelteinflüssen wie Feuchtigkeit oder Vibrationen. Der Permanentmagnet ist beispielsweise als Neodym-Eisen-Bor-Magnet (NdFeB-Magnet), oder als Kobaltmagnet, insbesondere Samarium-Kobalt-Magnet, ausgebildet.

Die erste Stützscheibe ist der ersten Endseite zugewandt, dient also dem Abstützen des Rotors an der ersten Endeseite. Die erste Stützscheibe ist beispielsweise zumindest teilweise, insbesondere vollständig, aus Bronze hergestellt. Die erste Stützscheibe ist vorzugsweise derart ausgebildet und angeordnet, dass sie bei einer Beschleunigung des Elektromotors eine von dem Rotor auf den Außenring und/oder das Gehäuse, insbesondere den Gehäuseboden, wirkende Kraft auf die Fläche des Außenrings und/oder des Gehäuses verteilt. Beispielsweise ist eine Fläche, mit der die Stützscheibe am Rotor anliegt, größer als die Fläche, mit der die Stützscheibe bei einer Belastung an dem Außenring und/oder dem Gehäuse anliegt. Bevorzugt liegt die erste Stützscheibe nur stirnseitig am Rotor an. Vorzugsweise ist die erste Stützscheibe derart ausgebildet, dass sie sich bei Krafteinwirkung nur gegen den Außenring und/oder das Gehäuse, insbesondere den Gehäuseboden, abstützt.

Die erste Stützscheibe ist vorzugweise mit einem Innenumfang auf einem umlaufenden Absatz stirnseitig an den Rotor angeordnet. Der umlaufende Absatz ist insbesondere aus einem Kunststoff ausgebildet, insbesondere dem Kunststoff mit dem der mindestens eine Permanentmagnet mit der Rotorwelle verbunden ist. Das erste Wellenlager ist beispielsweise mit einem Innenring unmittelbar auf der Rotorwelle angeordnet. Insbesondere ist vorgesehen, dass das erste Wellenlager und das zweite Wellenlager identisch ausgebildet sind. Alternativ dazu ist vorgesehen, dass das erste Wellenlager und das zweite Wellenlager unterschiedlich ausgebildet sind.

Die Erfindung weist gegenüber dem Stand der Technik den Vorteil auf, dass durch das Vorhandensein der Stützscheibe der Elektromotor für sehr hohe axiale Beschleunigung, also Beschleunigung entlang der Längsachse der Rotorwelle, ausgebildet ist. Dadurch, dass der Gehäuseboden, an dem sich der Rotor zumindest mittelbar abstützt, einstückig mit dem zylindrischen Abschnitt des Gehäuses ausgebildet ist, ergibt sich eine vorteilhafte strukturelle Stabilität des Motors.

Gemäß einer ersten Ausgestaltung hat sich als vorteilhaft herausgestellt, wenn vorgesehen ist, dass an dem Außenring des ersten Wellenlagers mindestens ein Absatz ausgebildet ist, und dass der Absatz an dem Gehäuse anliegt. Der Absatz ist beispielsweise durch einen umlaufenden Vorsprung oder eine umlaufende Stufe im Außenring des ersten Wellenlagers gebildet. Insbesondere ist der Absatz als axialer Bundabsatz ausgebildet. Das erste Wellenlager liegt mit dem Absatz vorzugsweise unmittelbar an dem Gehäuse, insbesondere dem Gehäuseboden, an. Vorzugsweise stützt sich die erste Stützscheibe an dem Außenring, insbesondere dem Absatz, und oder dem Gehäuse, insbesondere dem Gehäuseboden, ab. Es ist aber insbesondere auch vorgesehen, dass sich die erste Stützscheibe nur an Außenring abstützt.

Gemäß einer weiteren Ausgestaltung des Elektromotors hat sich als vorteilhaft herausgestellt, wenn vorgesehen ist, dass der Absatz von einer dem Rotor zugewandten Innenseite an dem Gehäuse anliegt. Insbesondere ist vorgesehen, dass das Gehäuse mindestens einen Rücksprung aufweist, und dass der Absatz in dem Rücksprung angeordnet ist. Vorzugsweise weist der Absatz in axialer Richtung eine Tiefe auf, die in etwa der Tiefe des Rücksprungs entspricht. Vorzugsweise weist der Absatz eine etwas geringere Tiefe als der Rücksprung auf. Die Differenz zwischen der Tiefe des Absatzes und des Rücksprungs ist genau der Betrag, um den sich der Rotor bei einer axialen Beschleunigung in Richtung des ersten Wellenlagers bewegen kann, bevor die erste Stützscheibe an dem Außenring des ersten Wellenlagers anliegt.

Eine weitere Ausgestaltung sieht vor, dass der Absatz an dem einstückig mit dem Gehäuse ausgebildeten Gehäuseboden anliegt. Das Gehäuse ist vorzugsweise topfartig ausgebildet, wobei die Rotorwelle den einstückig mit der zylindrischen Gehäusewand ausgebildeten Gehäuseboden durchtritt. Der Gehäuseboden ist an der ersten Endseite des Elektromotors angeordnet. Bevorzugt ist das erste Wellenlager zumindest teilweise in dem Gehäuseboden angeordnet.

Beispielweise weist das Gehäuse, insbesondere der Gehäuseboden, mindestens eine Ausnehmung auf, durch die das erste Wellenlager das Gehäuse durchtritt. Insbesondere steht das erste Wellenlager an der Außenseite, insbesondere an der ersten Endseite, von dem Gehäuse hervor. Dadurch wird eine vorteilhafte Stabilität bei der Anordnung des ersten Wellenlagers in dem Gehäuse erreicht. An der ersten Endseite ist die Rotorwelle im Wesentlichen bündig mit dem ersten Wellenlager angeordnet.

Um den Rotor in Längsrichtung bei nicht vorhandener Belastung bzw. Beschleunigung entlang der Längsachse von dem Außenring bzw. dem Gehäuse beabstandet zu halten, ist gemäß einer weiteren Ausgestaltung vorgesehen, dass der Rotor mit mindestens einer ersten Feder, beispielsweise einer Tellerfeder, in Richtung des zweiten Wellenlagers bzw. der zweiten Endseite des Elektromotors vorgespannt ist. Das erste Wellenlager stützt sich derart zumindest mittelbar am Gehäuse und/oder am ersten Wellenlager ab, dass der Rotor in Richtung des zweiten Wellenlagers bzw. der zweiten Endseite gedrängt wird. Bei einer Beschleunigung, die den Rotor in Richtung der ersten Endseite drängt, wird die erste Feder weiter verformt. Vorzugsweise ist vorgesehen, dass sich die erste Feder an der ersten Endseite des Rotors an einem Innenring des ersten Wellenlagers abstützt. Die erste Feder ist vorzugsweise unmittelbar auf der Rotorwelle angeordnet.

Das Zusammenwirken zwischen erster Stützscheibe und dem ersten Wellenlager bzw. dem Gehäuse lässt sich gemäß einer weiteren Ausgestaltung des Elektromotors dadurch verbessern, dass die erste Stützscheibe mindestens einen in axialer Richtung entlang der Längsachse der Rotorwelle hervorstehenden Vorsprungsbereich aufweist. Der Vorsprungbereich liegt bei einer Beschleunigung zumindest teilweise, insbesondere vollständig an dem ersten Wellenlager und/oder dem Gehäuse, insbesondere an dem Außenring des ersten Wellenlagers, an. Vorzugsweise ist eine Erstreckung des Vorsprungsbereichs und des Außenrings im Wesentlichen übereinstimmend. Beispielsweise weist die Stützscheibe zumindest im Vorsprungsbereich entlang der Längsachse der Rotorwelle eine größere Materialdicke als die verbleibenden Bereiche der Stützscheibe auf. Insbesondere weist die Stützscheibe in radialer Richtung ausgehend von der Rotorwelle eine erste Materialdicke und im Vorsprungsbereich eine zweite, größere Materialdicke auf.

Als vorteilhaft hat sich gemäß einer weiteren Ausgestaltung des Elektromotors herausgestellt, wenn vorgesehen ist, dass das zweite Wellenlager an einem mit dem Gehäuse verbundenen, insbesondere form-, kraft- und/oder stoffschlüssig verbundenen Deckelelement anliegt. Das zweite Wellenlager ist vorzugsweise als Schrägkugellager ausgebildet. Das Deckelelement ist z. B. in das Gehäuse eingepresst und/oder verklebt. Alternativ dazu ist vorgesehen, dass das Deckelelement vorzugsweise mit dem Gehäuse, insbesondere mit dem zylindrischen Abschnitt, verschweißt ist. Ferner alternativ ist vorgesehen, dass das Deckelelement mit dem Gehäuse verschraubt ist, beispielsweise in das Gehäuse eingeschraubt oder auf das Gehäuse aufgeschraubt. Das Deckelelement ist vorzugsweise an der zweiten Endseite des Elektromotors angeordnet. Insbesondere ist das Gehäuse an der zweiten Endseite im Wesentlichen durch das Deckelelement verschlossen bzw. dessen Innenraum begrenzt. Besonders bevorzugt ist vorgesehen, dass das zweite Wellenlager zumindest teilweise in dem Deckelelement angeordnet ist. Beispielsweise weist das Deckelelement eine zentrale Ausnehmung auf, in die das zweite Wellenlager zumindest teilweise, insbesondere vollständig, eingebracht ist. Vorzugsweise steht das zweite Wellenlager an der zweiten Endseite von dem Deckelelement hervor, z. B. um etwa 1/3 oder ¼ seiner Breite.

Ferner ist bevorzugt vorgesehen, dass das zweite Wellenlager mindestens einen Absatz aufweist, insbesondere an einem Außenring, und dass das zweite Wellenlager mit dem Absatz an dem Deckelelement anliegt. Dadurch wird das zweite Wellenlager auch in axialer Richtung in Bezug auf das Deckelelement stabilisiert. Beispielsweise sind das erste Wellenlager und das zweite Wellenlager identisch ausgebildet.

Alternativ oder zusätzlich dazu ist vorgesehen, dass das Deckelelement mindestens einen Rücksprung aufweist, und dass das zweite Wellenlager in dem Rücksprung anliegt. Beispielsweise ist der Rücksprung in einer zentralen Ausnehmung in dem Deckelelement angeordnet. Das zweite Wellenlager liegt vorzugsweise, insbesondere mit einem Außenring, an einer von dem Rotor abgewandten Seite an dem Rücksprung an. Der Innenring des zweiten Wellenlagers ist vorzugsweise unmittelbar auf der Rotorwelle angeordnet.

Eine weitere Ausgestaltung des Elektromotors sieht vor, dass der Rotor mindestens eine zweite Stützscheibe aufweist. Beispielsweise ist die zweite Stützscheibe an der zweiten Endseite des Elektromotors angeordnet. Vorzugsweise ist die zweite Stützscheibe an der dem zweiten Wellenlager zugewandten Seite des Rotors angeordnet. Die Stützscheibe ist vorzugsweise zwischen Rotor und einer Motorplatine angeordnet. Insbesondere weist die zweite Stützscheibe mindestens einen sich konisch verjüngenden Abschnitt auf. Vorzugsweise verjüngt sich der Abschnitt in Richtung des zweiten Wellenlagers. Die zweite Stützscheibe ist stirnseitig an dem Rotor angeordnet, insbesondere unmittelbar auf der Rotorwelle angeordnet. Vorzugsweise sind die erste Stützscheibe und die zweite Stützscheibe aus dem gleichen Material, z. B. Bronze, hergestellt.

Durch das Vorhandensein der zweiten Stützscheibe wird die Widerstandskraft des Elektromotors, auch bei starken Verzögerungen, weiter gesteigert.

Eine weitere Ausgestaltung sieht vor, dass, insbesondere an der zweiten Endseite des Elektromotors, mindestens eine Lagerhülse angeordnet ist. Die Lagerhülse ist auf der Rotorwelle und das zweite Wellenlager ist, insbesondere mit seinem Innenring, auf der Lagerhülse angeordnet. Die Lagerhülse erstreckt sich auf der Rotorwelle beispielsweise zwischen dem zweiten Wellenlager und dem Rotor oder der zweiten Stützscheibe. Es ist auch vorgesehen, dass sich die Lagerhülse nur im Bereich des zweiten Wellenlagers erstreckt. Die Lagerhülse ist insbesondere von dem Deckelelement umgeben.

Die Lagerhülse weist insbesondere mindestens einen umlaufenden Vorsprung auf. Der umlaufende Vorsprung ist z. B. etwa mittig in der Längserstreckung der Lagerhülse angeordnet. Eine radiale Höhe des Vorsprungs entspricht insbesondere etwa einer radialen Höhe eines Innenrings des zweiten Wellenlagers. Insbesondere liegt der umlaufende Vorsprung an dem Innenring des zweiten Wellenlagers an. Vorzugsweise ist die Lagerhülse derart ausgebildet, dass sich die zweite Stützscheibe an der Lagerhülse abstützt, wenn der Elektromotor derart beschleunigt oder verzögert wird, dass sich der Rotor in Richtung des zweiten Wellenlagers verschiebt.

Beispielsweise ist vorgesehen, dass sich die Lagerhülse in einer Richtung entlang der Rotorachse zumindest mittelbar an dem Rotor abstützt. Vorzugsweise ist zwischen Lagerhülse und Rotor, insbesondere zwischen Lagerhülse und zweiter Stützscheibe, mindestens eine zweite Feder angeordnet. Die zweite Feder ist beispielsweise als Spiralfeder ausgebildet. Insbesondere ist die zweite Feder in einer die Rotorwelle umgebenden Ausnehmung in der Lagerhülse angeordnet und stützt sich in Längsrichtung gegen die zweite Stützscheibe ab. Die erste und die zweite Feder dienen der Zentrierung des Rotors, insbesondere im Betrieb.

In dem Gehäuse des Elektromotors ist vorzugsweise eine Leiterplatte angeordnet und in dem Innenraum des Gehäuses angeordnet. Die Leiterplatte umfasst beispielsweise eine Leistungselektronik und/oder eine Steuer- und Regelungselektronik und/oder mindestens einen Sensor und/oder mindestens eine Kommunikationsschnittstelle. Beispielsweise ist die Leiterplatte in Längsrichtung zwischen dem ersten Wellenlager und dem zweiten Wellenlager angeordnet. Insbesondere ist die Leiterplatte näher an der zweiten Endseite als an der ersten Endseite angeordnet. Um vorteilhaft eine Beschädigung der Leiterplatte bei einer Beschleunigung des Elektromotors zu verhindern, ist mindestens ein Stützmittel vorgesehen. Die Leiterplatte ist zumindest teilweise an einer dem zweiten Wellenlager zugewandten Seite des Stützmittels angeordnet und liegt zumindest teilweise an dem Stützmittel an. Das Stützmittel ist beispielsweise derart stabil ausgebildet, dass es eine Durchbiegung der Leiterplatte begrenzt und/oder verhindert. Beispielsweise weist das Stützmittel eine Mehrzahl von Ausnehmungen auf, um die Spulenanschlüsse für den Stator durchzuführen. Es ist vorgesehen, dass das Stützmittel als Ring ausgebildet ist.

Eine weitere Ausgestaltung des Elektromotors sieht vor, dass der Elektromotor mindestens eine Außenhülle aufweist, und dass die Außenhülle das Gehäuse vollständig umgibt. Die Außenhülle ist vorzugsweise topfartig mit einem geschlossenen und einem offenen Ende ausgebildet. Besonders bevorzugt ist vorgesehen, dass an der zweiten Endseite des Motors ein Getriebe mit seinem Getriebegehäuse angeordnet ist, und dass die Außenhülle des Elektromotors umlaufend mit dem Getriebegehäuse des Getriebes verschweißt ist. Vorzugsweise ist das offene Ende der Außenhülle in Richtung des Getriebes orientiert, so dass dieses offene Ende von dem Getriebegehäuse verschlossen ist. Das Getriebe ist insbesondere mit einem mit der Rotorwelle verbundenen Ritzel antreibbar. Insbesondere weist das Getriebegehäuse mindestens ein Stützelement auf. Das Stützelement ist beispielsweise ringartig ausgebildet. Das Stützelement liegt im Montagezustand insbesondere an dem Deckelelement und dem zweiten Wellenlager an und hält das zweite Wellenlager entlang der Längsachse in Position. Insbesondere ist vorgesehen, dass das Stützelement nur an dem zweiten Wellenlager anliegt. Durch die Außenhülle kann eine vorteilhafte Stabilität der Einheit aus Elektromotor und Getriebe erreicht werden.

Alternativ dazu ist vorgesehen, dass das Getriebegehäuse mit dem Gehäuse des Elektromotors, insbesondere mit dem zylindrischen Abschnitt verschweißt ist. Beispielsweise ist das Getriebegehäuse dazu zumindest teilweise auf das Gehäuse des Motors aufgeschoben.

Das Getriebegehäuse zeichnet sich beispielsweise dadurch aus, dass es seinen größten Durchmesser im Anschlussbereich zum Elektromotor aufweist. Vorzugsweise ist ein Durchmesser des Getriebegehäuses mit Ausnahme des Anschlussbereichs kleiner als der Durchmesser des Gehäuses des Elektromotors. Ausgehend von dem Durchmesser des Elektromotors im Anschlussbereich reduziert sich beispielsweise der Durchmesser des Getriebegehäuses in einem Übergangsbereich. Der Übergangsbereich erstreckt sich beispielsweise ausgehend von einer von dem zweiten Wellenlager abgewandten Seite des Stützmittels in dem Getriebegehäuse. Alle in axialer Richtung auf den Übergangsbereich folgenden Durchmesser des Getriebes sind beispielsweise kleiner oder gleich dem an den Übergangsbereich anschließenden Durchmesser.

Die Außenhülle und/oder das Getriebegehäuse sind vorzugsweise aus einem rostfreien Stahl hergestellt.

Besonders bevorzugt ist ferner vorgesehen, dass die Leiterplatte zumindest teilweise, insbesondere vollständig, in einer Vergussmasse angeordnet ist. Die Vergussmasse liegt vorzugsweise an dem Deckelelement an. Insbesondere ist vorgesehen, dass das Stützmittel für die Leiterplatte zumindest teilweise von der Vergussmasse gestützt wird. Insbesondere ist vorgesehen, dass die Spulenanschlüsse des Stators lose, insbesondere im Wesentlichen wellenförmig, zur Leiterplatte verlegt sind, um eine Beschädigung bei einer etwaigen Bewegung der Leiterplatte relativ zum Stator zu verhindern. Ferner wird dadurch, bei Vorhandensein eines digitalen Sensors eine Kalibrierung vereinfacht.

Die Erfindung lässt sich auch anhand der folgenden Aspekte beschreiben:
Aspekt 1: Elektromotor, aufweisend mindestens ein Gehäuse, mindestens einen Rotor und mindestens einen Stator, wobei der Rotor mindestens eine Rotorwelle aufweist, wobei die Rotorwelle mit mindestens einem ersten Wellenlager und mindestens einem zweiten Wellenlager gelagert ist, wobei das erste Wellenlager einen Außenring aufweist, dadurch gekennzeichnet, dass der Rotor mindestens eine erste Stützscheibe aufweist, und dass die erste Stützscheibe zum Abstützen des Rotors gegen den Außenring bei einer axialen Beschleunigung entlang einer Längsachse der Rotorwelle ausgebildet ist.
Aspekt 2: Elektromotor, aufweisend mindestens ein Gehäuse, mindestens einen Rotor und mindestens einen Stator, wobei der Rotor mindestens eine Rotorwelle aufweist, wobei die Rotorwelle mit mindestens einem ersten Wellenlager und mindestens einem zweiten Wellenlager gelagert ist, wobei das erste Wellenlager einen Außenring aufweist, dadurch gekennzeichnet, dass der Rotor mindestens eine erste Stützscheibe aufweist, und dass die erste Stützscheibe zum Abstützen des Rotors gegen den Außenring und/oder gegen das Gehäuse bei einer axialen Beschleunigung entlang einer Längsachse der Rotorwelle ausgebildet ist.

Bei einem derartigen Elektromotor gemäß einem der beiden Aspekte ist die Stützscheibe an einer beliebigen Endseite angeordnet. Es ist vorgesehen, dass das Gehäuse an der ersten Endseite mit einem Deckelelement verschlossen und an der zweiten Endseite einen einstückigen Gehäuseboden aufweist. Ferner alternativ ist vorgesehen, dass das Gehäuse an beiden Endseiten mit einem Deckelelement verschlossen ist, die beispielsweise jeweils mit einem zylindrischen Abschnitt verschweißt sind. Weitere Ausgestaltungen von derartigen Elektromotoren ergeben sich aus den beschriebenen Ausführungsbeispielen und deren Merkmalen, auf die hier auch für diese Aspekte bzw. die vorgenannten Elektromotoren verwiesen wird. Insbesondere liegt es auch im Rahmen der Erfindung diesen Aspekten bzw. Elektromotoren jeweils Ansprüche mit den Merkmalen der abhängigen Ansprüche 2 bis 16 nachzuordnen. Gegebenenfalls vorhandene, bestimmte Artikel müssten dann in unbestimmte Artikel geändert werden.

Weitere vorteilhafte Ausgestaltungen der Erfindung ergeben sich aus der folgenden Figurenbeschreibung und den abhängigen Unteransprüchen.

Es zeigen:
- Fig. 1: ein Ausführungsbeispiel eines erfindungsgemäßen Motors mit angeschlossenem Getriebe in teilweise geschnittener Ansicht,
- Fig. 2: ein Ausführungsbeispiel eines Elektromotors im Schnitt entlang der Rotorachse, und
- Fig. 3: ein weiteres Ausführungsbeispiel eines Elektromotors im Schnitt entlang der Rotorachse.

In den verschiedenen Figuren der Zeichnung sind gleiche Teile stets mit denselben Bezugszeichen versehen.

Zu der anschließenden Beschreibung wird beansprucht, dass die Erfindung nicht auf die Ausführungsbeispiele und dabei nicht auf alle oder mehrere Merkmale von beschriebenen Merkmalskombinationen beschränkt ist, vielmehr ist jedes einzelne Teilmerkmal des/jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels von Bedeutung für den Gegenstand der Erfindung.

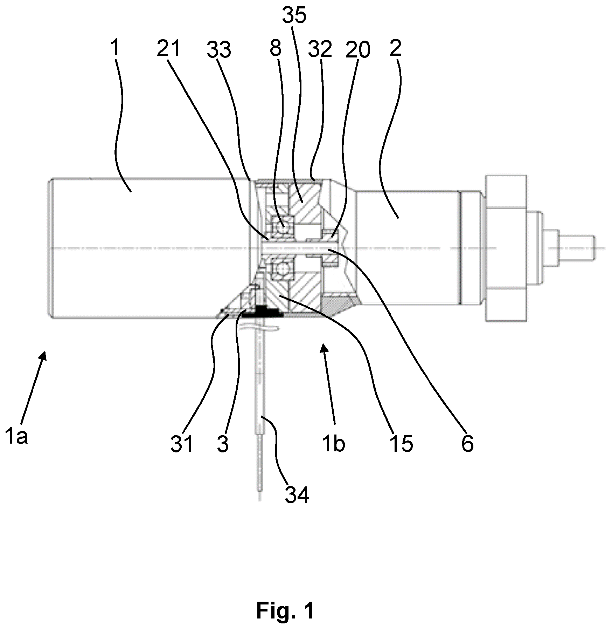

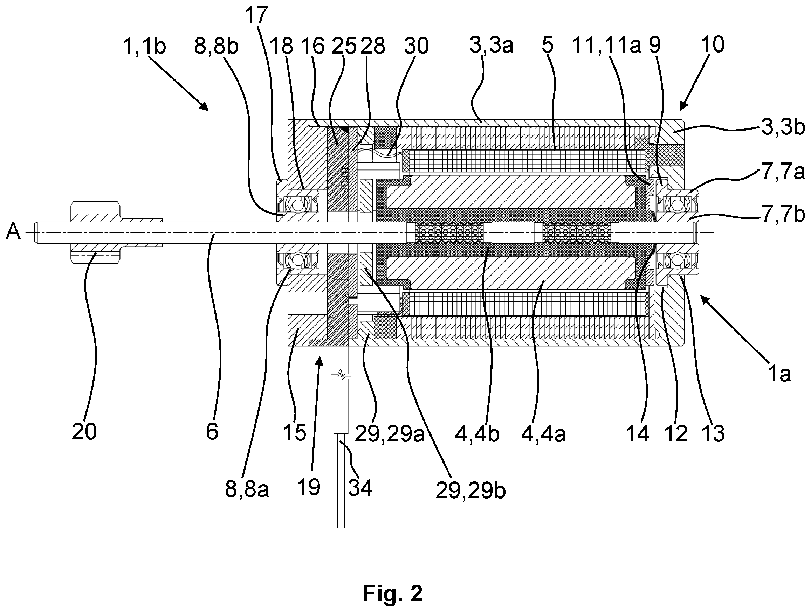

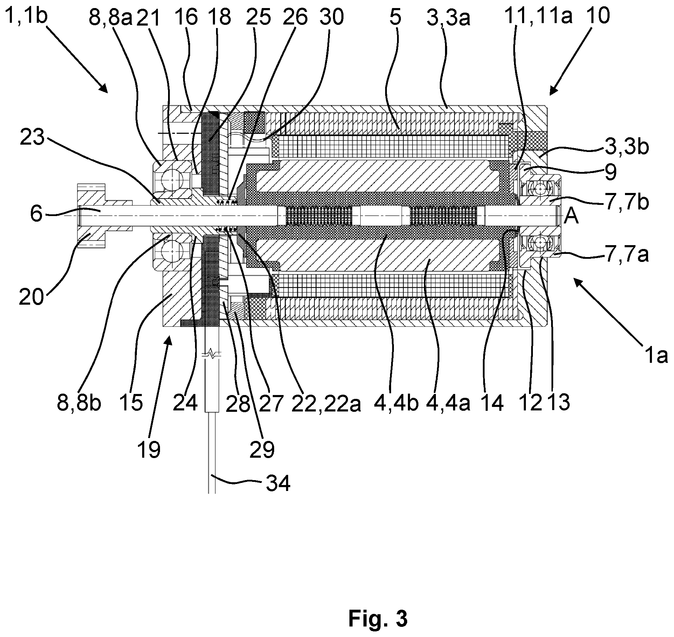

Fig. 1 zeigt ein Ausführungsbeispiel eines Elektromotors 1, der mit einem Getriebe 2 verbunden ist, in teilweise geschnittener Seitenansicht. Geschnitten ist der Bereich, in dem der Elektromotor 1 an das Getriebe 2 angefügt ist. Fig. 2 und 3 zeigen jeweils ein anderes Ausführungsbeispiel eines erfindungsgemäßen Motors in geschnittener Ansicht entlang einer Rotorwelle 6.

Gemäß Fig. 2 und 3 weist der Elektromotor 1 jeweils mindestens ein Gehäuse 3 auf, in dem ein Rotor 4 und ein Stator 5 angeordnet sind. Die Rotorwelle 6 verläuft zentral durch das Gehäuse 3. Die Rotorwelle 6 ist mit einem ersten Wellenlager 7 sowie einem zweiten Wellenlager 8 gelagert. Das erste Wellenlager 7 weist einen Außenring 7a auf, an dem bei diesem Ausführungsbeispiel ein Absatz 9 ausgebildet ist. Der Absatz 9 liegt an dem Gehäuse 3 an. Alternativ dazu ist kein Absatz 9 am ersten Wellenlager 7 vorgesehen und das erste Wellenlager 7 ist unmittelbar zumindest teilweise im Gehäuse 3 angeordnet, z. B. wie das zweite Wellenlager 8 der Fig. 3. Der Rotor 4 weist gemäß Fig. 2 und Fig. 3 an der ersten Endseite 10 mindestens eine erste Stützscheibe 11 auf, die ebenfalls in Richtung der ersten Endseite 10 orientiert ist. Die erste Stützscheibe 11 ist stirnseitig an dem Rotor 4 an einer ersten Endseite 10 des Elektromotors 1 angeordnet. Die erste Stützscheibe 11 ist mit einem Innenumfang auf einem Absatz aus Kunststoff an dem Rotor 4 angeordnet.

Die Stützscheibe 11 ist hier zum Abstützen des Rotors 4 gegen den Außenring 7a des ersten Wellenlagers 7 ausgebildet, wenn der Elektromotor 1 derart axial beschleunigt wird, dass sich der Rotor 4 in Richtung des ersten Wellenlagers 7 bewegt, gemäß Fig. 2 beispielsweise eine Beschleunigung nach links. Erfolgt eine derartige Beschleunigung, legt sich die erste Stützscheibe 11 zusammen mit dem Rotor 11 gegen den Außenring 7a des ersten Wellenlagers 7 an und überträgt damit Kräfte von dem Rotor 4 auf das Gehäuse 3. Alternativ dazu ist vorgesehen, dass der Elektromotor 1 derart ausgebildet ist, dass sich die Stützscheibe 11 zumindest teilweise auch oder nur an das Gehäuse 3 anlegt.

Der stufenartige Absatz 9 des ersten Wellenlagers 7 liegt an einer dem Rotor 4 zugewandten Innenseite des Gehäuses 3 in einem Rücksprung 12 in einer Ausnehmung 13 in dem Gehäuse 3 an. Der Rücksprung 12 ist in axialer Richtung entlang der Längsachse A etwas tiefer als die axiale Erstreckung des Absatzes 9, so dass der Absatz 9 und die Stützscheibe 11 im Betrieb voneinander beabstandet sind. Im Betrieb ist die Stützscheibe 11 in axialer Richtung etwa in Höhe des Beginns des Rücksprungs 12 angeordnet, so dass sich die Stützscheibe 11 bei einer Beschleunigung in den Rücksprung 12 bzw. die Ausnehmung 13 hineinbewegt.

Das Gehäuse 3 weist einen zylindrischen Abschnitt 3a auf, der den Motor 1 im Wesentlichen entlang seiner Längsachse umgibt, sowie einen einstückig mit dem zylindrischen Abschnitt 3a ausgebildeten Gehäuseboden 3b. Die erste Stützscheibe 11 ist dem Gehäuseboden 3b zugewandt. In dem Gehäuseboden 3b ist die Ausnehmung 13 angeordnet, die den Gehäuseboden 3b vollständig durchtritt, so dass auch das erste Wellenlager 7 den Gehäuseboden 3b zusammen mit der Rotorwelle 6 durchtritt. Das erste Wellenlager 7 steht an der ersten Endseite 10 aus dem Gehäuseboden 3b hervor. Die Rotorwelle 6 ist im Wesentlichen bündig mit dem ersten Wellenlager 7 angeordnet.

Der Rotor 4 ist mittels Kunststoffspritzguss hergestellt, so dass der mindestens eine Permanentmagnet 4a mittels Kunststoffelementen 4b an die Rotorwelle 6 angeformt ist.

Der Rotor 4 weist mindestens eine erste Feder 14 auf, die hier als Tellerfeder ausgebildet ist, und den Rotor 4 in Richtung des zweiten Wellenlagers 8 bzw. der zweiten Endseite 19 vorspannt. Die erste Feder 14 ist unmittelbar auf der Rotorwelle 6 angeordnet und stützt sich gegen den Rotor 4 und gegen einen Innenring 7b des ersten Wellenlagers 7 ab. Die erste Stützscheibe 11 ist derart ausgebildet, dass sie einen in axialer Richtung entlang der Rotorwelle 6 vorstehenden Vorsprungsbereich 11a aufweist, der gegenüber einem radial innenliegenden Bereich der Stützscheibe 11 in axialer Richtung dicker ausgebildet ist. Nur der Vorsprungsbereich 11a liegt bei einer Beschleunigung an dem Außenring 7a an. Die radiale Erstreckung des Vorsprungsbereichs 11a entspricht etwa der radialen Erstreckung des Außenrings 7a des ersten Wellenlagers 7.

Auf der dem Gehäuseboden 3b gegenüberliegenden Seite des Gehäuses 3, nämlich der zweiten Endseite 19, ist das Gehäuse 3 mit einem Deckelelement 15 verschlossen. Das Deckelelement 15 weist einen außenliegenden Absatz 16 auf, auf den der zylindrische Bereich 3a des Gehäuses 3 aufgeschoben ist. Das Deckelelement 15 ist in das Gehäuse 3 eingepresst und mit dem Gehäuse 3 verklebt.

Das zweite Wellenlager 8 liegt an dem Deckelelement 15 an und ist zumindest teilweise in dem Deckelelement 15 angeordnet. Bei dem Ausführungsbeispiel der Fig. 2 weist das zweite Wellenlager 8 an einem Außenring 8a einen radial nach außen vorstehenden, stufenartigen Absatz 17 auf, der stirnseitig an dem Deckelelement 15 anliegt. Zudem ist das zweite Wellenlager 8 zumindest teilweise in einer zentralen Ausnehmung 18 in dem Deckelelement 15 angeordnet. Ein Innenring 8b des zweiten Wellenlagers 8 ist unmittelbar auf der Rotorwelle 6 angeordnet. An der zweiten Endseite 19 des Elektromotors 1 tritt die Rotorwelle 6 aus dem Gehäuse 3 hervor. Auf der Rotorwelle 6 ist ferner ein Ritzel 20 zum Zusammenwirken mit dem in Fig. 1 dargestellten Getriebe 2 angeordnet. Das Ritzel 20 ist vorzugsweise mit der Rotorwelle 6 verschweißt, z. B. mit Schweißpunkten verschweißt.

Bei dem Ausführungsbeispiel der Fig. 3 weist das Deckelelement 15 in der zentralen Ausnehmung 18 einen Rücksprung 21 auf, so dass das zweite Wellenlager 8 mit seinem Außenring 8a in axialer Richtung auf der von dem Rotor 4 abgewandten Seite des Deckelelementes 15 an dem Deckelelement 15 anliegen kann. Bei dem Ausführungsbeispiel der Fig. 3 ist an der zweiten Endseite 19 zudem eine zweite Stützscheibe 22 angeordnet, die an dem Rotor 4 anliegt und einen sich in Richtung des zweiten Wellenlagers 8 konisch verjüngenden Abschnitt 22a aufweist. Zudem ist an der zweiten Endseite 19 eine Lagerhülse 23 vorgesehen, die auf der Rotorwelle 6 angeordnet ist. Das zweite Wellenlager 8 ist mit einem Innenring 8b auf der Lagerhülse 23 gelagert. Hier ist das zweite Wellenlager 8 als Schräglager und insbesondere größer als das erste Wellenlager 7 ausgebildet.

Die Lagerhülse 23 weist einen umlaufenden Vorsprung 24 auf, der zumindest teilweise an einer Vergussmasse 25 des Elektromotors 1 angeordnet ist. Zudem stützt sich der Innenring 8b des zweiten Wellenlagers 8 auf der von dem Rotor 4 abgewandten Seite des umlaufenden Vorsprungs 24 an diesem ab. Die Lagerhülse 23 stützt sich zumindest mittelbar an dem Rotor 4 ab, hier über die zweite Stützscheibe 22. Für die mittelbare Abstützung weist die Lagerhülse 23 eine die Rotorwelle 6 radial umgebende Ausnehmung 26 auf, in der eine zweite Feder 27 in Form einer Spiralfeder angeordnet ist. Die zweite Feder 27 stützt sich in axialer Richtung gegen die Lagerhülse 23 und gegen die zweite Stützscheibe 22 ab, so dass der Rotor 4 federnd zwischen der ersten Feder 14 und der zweiten Feder 27 zentriert ist. Die zweite Feder 27 drängt den Rotor 4 in Richtung des ersten Wellenlagers 7 bzw. der ersten Endseite 10.

In einem von dem Gehäuse 3 umschlossenen Innenraum, insbesondere von dem Gehäuse 3 und dem Deckelelement 15, ist mindestens eine Leiterplatte 28 angeordnet. Die Leiterplatte 28 liegt an der dem zweiten Wellenlager 8 zugewandten Seite eines Stützmittels 29 an dem Stützmittel 29 an. Die Leiterplatte 28 ist in dem Gehäuse 3 zwischen dem ersten Wellenlager 7 und dem zweiten Wellenlager 8 angeordnet.

Das Stützmittel 29 gemäß Fig. 2 weist zusätzlich zu einem Außenring 29a auch noch ein Innenelement 29b auf.. Die Leiterplatte 28 ist zumindest teilweise von der Vergussmasse 25 umschlossen. Die Spulenanschlüsse 30, die zwischen Stator 5 und Leiterplatte 28 angeordnet sind, sind lose bzw. wellenförmig verlegt, um ein Kalibrieren eines digitalen Sensors - sofern vorhanden - zu ermöglichen und/oder eine Spannungsfreiheit der Spulenanschlüsse 30 zu gewährleisten, sofern eine Relativbewegung zwischen Leiterplatte 28 und Stator 5 erfolgt.

Gemäß Fig. 1 ist der Motor 1 vorzugsweise zusätzlich zum Gehäuse 3 von einer topfartigen Außenhülle 31 umschlossen, die das Gehäuse 3 des Elektromotors 1 vollständig, insbesondere auch im Bereich des Gehäusebodens 3b, umgibt. Die Außenhülle 31 ist mit einem Getriebegehäuse 32 des Getriebes 2 mit einer Schweißnaht 33 umlaufend, insbesondere mittels Laserschweißen, verschweißt. Durch das Verschweißen der Außenhülle 31 mit dem Getriebegehäuse 32 ist auch ein Stützelement 35 in axialer Richtung fixiert, dass auch das zweite Wellenlager 8 an dem Deckelelement 15 fixiert. Das Getriebe 2 ist mit dem auf der Rotorwelle 6 angeordneten Ritzel 20 antreibbar. Die Anschlüsse 34 des Motors 1 sind durch das Gehäuse 3 und die Außenhülle 31 nach außen geführt und am Gehäuse 3 bzw. an der Außenhülle 31 abgedichtet, z. B. vergossen.

Die Erfindung ist nicht auf die dargestellten und beschriebenen Ausführungsbeispiele beschränkt, sondern umfasst auch alle im Sinne der Erfindung gleichwirkenden Ausführungen. Es wird ausdrücklich betont, dass die Ausführungsbeispiele nicht auf alle Merkmale in Kombination beschränkt sind, vielmehr kann jedes einzelne Teilmerkmal auch losgelöst von allen anderen Teilmerkmalen für sich eine erfinderische Bedeutung haben. Ferner ist die Erfindung bislang auch noch nicht auf die im Anspruch 1 definierte Merkmalskombination beschränkt, sondern kann auch durch jede beliebige andere Kombination von bestimmten Merkmalen aller insgesamt offenbarten Einzelmerkmale definiert sein. Dies bedeutet, dass grundsätzlich praktisch jedes Einzelmerkmal des Anspruchs 1 weggelassen beziehungsweise durch mindestens ein an anderer Stelle der Anmeldung offenbartes Einzelmerkmal ersetzt werden kann.

### Bezugszeichenliste

- 1: Elektromotor
- 2: Getriebe
- 3: Gehäuse
- 3a: Zylindrischer Abschnitt
- 3b: Gehäuseboden
- 4: Rotor
- 4a: Permanentmagnet
- 4b: Kunststoffelement
- 5: Stator
- 6: Rotorwelle
- 7: Erstes Wellenlager
- 7a: Außenring
- 7b: Innenring
- 8: Zweites Wellenlager
- 8a: Außenring
- 8b: Innenring
- 9: Absatz
- 10: Erste Endseite
- 11: Erste Stützscheibe
- 11a: Vorsprungsbereich
- 12: Rücksprung
- 13: Ausnehmung
- 14: Erste Feder
- 15: Deckelelement
- 16: Absatz des Deckelelementes
- 17: Absatz des zweiten Wellenlagers
- 18: Zentrale Ausnehmung
- 19: Zweite Endseite
- 20: Ritzel
- 21: Rücksprung des Deckelelementes
- 22: Zweite Stützscheibe
- 22a: Abschnitt
- 23: Lagerhülse
- 24: Vorsprung
- 25: Vergussmasse
- 26: Ausnehmung
- 27: Feder
- 28: Leiterplatte
- 29: Stützmittel
- 29a: Außenring
- 29b: Innenelement
- 30: Spulenanschluss
- 31: Außenhülle
- 32: Getriebegehäuse
- 33: Schweißnaht
- 34: Anschlüsse
- 35: Stützelement

## Patentansprüche

1. Elektromotor (1), aufweisend mindestens ein Gehäuse (3), mindestens einen Rotor (4) und mindestens einen Stator (5), wobei das Gehäuse (3) einen zylindrischen Abschnitt (3a) und an einer ersten Endseite (10) einen einstückig mit dem zylindrischen Abschnitt (3a) ausgebildeten Gehäuseboden (3b) aufweist, wobei das Gehäuse (3) an einer zweiten Endseite (19) mindestens ein Deckelelement (15) aufweist, wobei der Rotor (4) mindestens eine Rotorwelle (6) aufweist, wobei die Rotorwelle (6) mit mindestens einem ersten Wellenlager (7) und mindestens einem zweiten Wellenlager (8) gelagert ist, wobei das erste Wellenlager (7) einen Außenring (7a) aufweist,
**dadurch gekennzeichnet, dass**
der Rotor (4) mindestens eine erste Stützscheibe (11) aufweist, dass die erste Stützscheibe (11) der ersten Endseite (10) zugewandt ist, und dass die erste Stützscheibe (11) zum Abstützen des Rotors (3) gegen den Außenring (7a) des ersten Wellenlagers (7) und/oder gegen das Gehäuse (3) bei einer axialen Beschleunigung entlang einer Längsachse (A) der Rotorwelle (5) ausgebildet ist.

2. Elektromotor (1) nach Anspruch 1,
**dadurch gekennzeichnet, dass**
an dem Außenring (7a) mindestens ein Absatz (9) ausgebildet ist, und dass der Absatz (9) an dem Gehäuse (3) anliegt, besonders bevorzugt, dass der Absatz (9) von einer dem Rotor (4) zugewandten Innenseite an dem Gehäuse (3), insbesondere in einem Rücksprung (12) in dem Gehäuse (3) anliegt.

3. Elektromotor (1) nach Anspruch 2,
**dadurch gekennzeichnet, dass**
der Absatz (9) an dem einstückig mit dem Gehäuse (3) ausgebildeten Gehäuseboden (3b) anliegt.

4. Elektromotor (1) nach einem der Ansprüche 1 bis 4,
**dadurch gekennzeichnet, dass**
das Gehäuse (3), insbesondere der Gehäuseboden (3b), mindestens eine Ausnehmung (13) aufweist, und dass das erste Wellenlager (7) den Gehäuseboden (3b) zumindest teilweise durchtritt.

5. Elektromotor (1) nach einem der Ansprüche 1 bis 4,
**dadurch gekennzeichnet, dass**
der Rotor (4) mit mindestens einer ersten Feder (14), insbesondere einer Tellerfeder, in Richtung des zweiten Wellenlagers (8) vorgespannt ist, insbesondere dass sich die erste Feder (14) an der ersten Endseite (10) des Rotors (4) an einem Innenring (7b) des ersten Wellenlagers (7) abstützt.

6. Elektromotor (1) nach einem der Ansprüche 1 bis 5,
**dadurch gekennzeichnet, dass**
die erste Stützscheibe (11) mindestens einen in axialer Richtung entlang der Rotorwelle (6) hervorstehenden Vorsprungsbereich (11a) aufweist, und dass der Vorsprungsbereich (11a) bei einer Beschleunigung zumindest teilweise, insbesondere vollständig, am ersten Wellenlager (7) und/oder am Gehäuse (3) anliegt.

7. Elektromotor (1) nach einem der Ansprüche 1 bis 6,
**dadurch gekennzeichnet, dass**
das zweite Wellenlager (8) an einem mit dem Gehäuse (2) verbundenen, insbesondere form-, kraft- und/oder stoffschlüssig verbundenen, Deckelelement (15) anliegt und/oder dass das zweite Wellenlager (8) zumindest teilweise in dem Deckelelement (15) angeordnet ist.

8. Elektromotor (1) nach Anspruch 7,
**dadurch gekennzeichnet, dass**
das zweite Wellenlager (8) mindestens einen Absatz (17) aufweist, und dass das zweite Wellenlager (8) mit dem Absatz (15) an dem Deckelelement (15) anliegt und/oder dass das Deckelelement (15) mindestens einen Rücksprung (21) aufweist, und dass das zweite Wellenlager (8) in dem Rücksprung (21) anliegt.

9. Elektromotor (1) nach einem der Ansprüche 1 bis 8,
**dadurch gekennzeichnet, dass**
der Rotor (4) mindestens eine zweite Stützscheibe (22) aufweist, insbesondere dass die zweite Stützscheibe (22) mindestens einen sich in Axialrichtung der Längsachse (A) der Rotorwelle (6) konisch verjüngenden Abschnitt (22a) aufweist.

10. Elektromotor (1) nach einem der Ansprüche 1 bis 9,
**dadurch gekennzeichnet, dass**
mindestens eine Lagerhülse (23) vorhanden ist, dass die Lagerhülse (23) auf der Rotorwelle (6) angeordnet ist, und dass das zweite Wellenlager (8) auf der Lagerhülse (23) angeordnet ist.

11. Elektromotor (1) nach Anspruch 10,
**dadurch gekennzeichnet, dass**
die Lagerhülse (23) mindestens einen umlaufenden Vorsprung (24) aufweist, und dass der umlaufende Vorsprung (24) an einen Innenring (8b) des zweiten Wellenlagers (8) anliegt.

12. Elektromotor (1) nach Anspruch 11,
**dadurch gekennzeichnet, dass**
sich die Lagerhülse (23) in einer Richtung entlang der Rotorachse (6) zumindest mittelbar an dem Rotor (4) abstützt, insbesondere an einer zweiten Stützscheibe (22) abstützt.

13. Elektromotor (1) nach Anspruch 12,
**dadurch gekennzeichnet, dass**
zwischen Lagerhülse (23) und Rotor (4), insbesondere zwischen Lagerhülse (23) und zweiter Stützscheibe (22), mindestens eine zweite Feder (27) angeordnet ist, insbesondere mindestens eine Spiralfeder.

14. Elektromotor (1) nach einem der Ansprüche 1 bis 13,
**dadurch gekennzeichnet, dass**
mindestens eine Leiterplatte (28) in einem von dem Gehäuse (3) umschlossenen Innenraum angeordnet ist, insbesondere dass ein Stützmittel (29) vorhanden ist, und dass das die Leiterplatte (28) zumindest teilweise an einer dem zweiten Wellenlager (8) zugewandten Seite des Stützmittels (29) an dem Stützmittel (29) anliegt.

15. Elektromotor (1) nach einem der Ansprüche 1 bis 14,
**dadurch gekennzeichnet, dass**
mindestens eine Außenhülle (31) vorhanden ist, dass die Außenhülle (31) das Gehäuse (3) vollständig umgibt, insbesondere dass die Außenhülle (31) mit einem Getriebegehäuse (32) eines Getriebes (2) verschweißt ist, das mit der Rotorwelle (6) verbunden ist und/oder insbesondere dass ein Stützelement (35) von dem Getriebegehäuse (32) gehalten wird, insbesondere an dem Deckelelement (15) anliegend gehalten wird.
